# EUROPÄISCHE PATENTSCHRIFT

(11) **EP 1 035 913 B1**
(45) Veröffentlichungstag und Bekanntmachung des Hinweises auf die Patenterteilung: **09.04.2003**
(21) Anmeldenummer: 99955809.1
(22) Anmeldetag: 22.09.1999
(51) Int. Cl.: B01F 9/10, A01C 1/06, A23B 9/14, B01J 8/24

(54) **EINRICHTUNG ZUR HERSTELLUNG EINES SCHÜTTFÄHIGEN PRODUKTES UND VERFAHREN ZUR ANWENDUNG DER EINRICHTUNG**
DEVICE FOR PRODUCING A POURABLE PRODUCT AND METHOD FOR USING SAID DEVICE
DISPOSITIF POUR LA PRODUCTION D'UN PRODUIT APTE A L'ECOULEMENT ET PROCEDE POUR L'UTILISATION DE CE DISPOSITIF

(30) Priorität: 24.09.1998 WO PCT/DE98/02843
(43) Veröffentlichungstag der Anmeldung: 20.09.2000
(73) Patentinhaber: Glatt Systemtechnik GmbH, 01277 Dresden (DE); KWS Saat AG, 37574 Einbeck (DE)
(72) Erfinder: BRETSCHNEIDER, Frank, D-01465 Liegau-Augustusbad (DE); PETER, Bruno, D-37574 Einbeck (DE); BRÜCKNER, Jürgen, D-01157 Dresden (DE)
(74) Vertreter: Pätzelt, Peter, Dipl.-Ing.
(86) Internationale Anmeldenummer: DE9903093
(87) Internationale Veröffentlichungsnummer: WO00016886

(56) Entgegenhaltungen:
- EP-A- 0 544 289
- DE-A- 3 222 890
- DE-A- 3 705 343
- DE-A- 4 411 058
- US-A- 4 063 715
- US-A- 4 724 794
- PATENT ABSTRACTS OF JAPAN vol. 1995, no. 05, 30. Juni 1995 (1995-06-30) & JP 07 047261 A (HOSOKAWA MICRON CORP), 21. Februar 1995 (1995-02-21)
- PATENT ABSTRACTS OF JAPAN vol. 007, no. 039 (C-151), 17. Februar 1983 (1983-02-17) & JP 57 190643 A (FUJI PAUDARU KK), 24. November 1982 (1982-11-24)

## Beschreibung

### Technisches Gebiet

Die Erfindung betrifft eine Einrichtung zur Herstellung eines schüttfähigen Produktes, insbesondere ein schüttfähiges Produkt mit einer Beschichtung. Des weiteren betrifft die Erfindung zwei Verfahren zur Anwendung der Einrichtung.

Als schüttfähiges Produkt wird das im jeweiligen Anwendungsfall der Erfindung fertige Erzeugnis verstanden. Dabei kann das schüttfähige Produkt grundsätzlich aus gleichen oder verschiedenartigen Ausgangsstoffen mit radial homogener oder schichtförmiger Struktur aufgebaut werden.

Das schüttfähige Produkt kann beliebiger Art sein, soweit es möglich ist, dieses wie auch die jeweiligen Ausgangsstoffe, in eine radial-periphere Umwälzung zu versetzen.

### Stand der Technik

Nach dem Stand der Technik sind verschiedenartige Verfahren und Einrichtungen zum Granulieren von Ausgangsstoffen oder zum Beschichten von Kernen bekannt.

Die DE 41 28 258 A1 gibt ein Verfahren zur gleichmäßigen geschlossenen Beschichtung von Körnern, wie Samenkörner, mit einem Rotorgranulator mit integrierter Fließbett-Trocknung und eine Vorrichtung zu seiner Durchführung an. Verfahrensgemäß wird die vom laufenden Rotor umgewälzte Schüttung mit den gelösten oder suspendierten Beschichtungsstoffen durch eine oder mehrere im freien Innenraum des Stators angeordnete mit Druckluft unterstützte Düsen besprüht, wobei durch den Ringspalt zwischen Rotor und Stator Warmluft in den Raum mit der umgewälzten Schüttung eingebracht wird. Die zugehörige Einrichtung gibt einen Rotor an, dessen Querschnitt vom Zentrum in einem Winkel bis zu 45° zur Ebene abfällt und am äußeren Umfang mit einem Radius von etwa 10 bis 20% seines Durchmessers aufwärts gewölbt ist bis zu einem Randwinkel von 45°. Oberhalb des Rotors befindet sich im Stator, dem Umlenktrichter, eine dünnwandige rotationssymmetrische Ringsieboder Ringspaltfläche, die außen von einem Luftkanal umschlossen ist.

Die DE 4411058 C2 gibt eine Vorrichtung zum Beschichten von körnigem Gut, insbesondere zum Beschichten von Saatgut mit Chemikalien wie Beizmittel, an. Die Vorrichtung weist eine konisch nach oben erweiterte Seitenwand eines hochtourig drehenden Mischzylinders auf, der um eine senkrechte Achse drehbar ist. Die flüssigen Chemikalien werden über eine Sprüheinrichtung auf das im Mischzylinder befindliche körnige Gut aufgesprüht. Zur besseren Durchmischung des körnigen Gutes in der Mischkammer sind an einem Austragring oberhalb des Mischzylinders gebogene Ableitflügel angeordnet, die das Gut umlenken und in den konischen Mischzylinder nach unten zurückleiten.

Die Lösungen nach dem Stand der Technik weisen vielfach eine relativ geringe Produktivität auf oder sind nur begrenzt für Beschichtungen einsetzbar. Z. B. greifen die Ableitflügel in das Gut ein, wobei empfindliche Produkte oder deren Beschichtungen, z. B. in Form einer pastösen Hüllschicht, zerstört werden.

### Darstellung der Erfindung

Der Erfindung liegt als Aufgabe zugrunde, eine Einrichtung zur Herstellung eines schüttfähigen Produktes, insbesondere eines schüttfähiges Produkt mit einer empfindlichen Struktur oder Beschichtung, der eingangs genannten Art anzugeben, die bei einem relativ geringem technischen Aufwand eine hohe Qualität und Produktivität gewährleistet. Des Weiteren betrifft die Erfindung zwei Verfahren zur Anwendung der Einrichtung.

Die Erfindung löst die Aufgabe für die Einrichtung durch die im Anspruchs 1 genannten Merkmale. Weiterbildungen der Erfindung sind in den Unteransprüchen 2 bis 10 gekennzeichnet.

Die Aufgabe für die Verfahren wird durch die in den kennzeichnenden Teilen der Ansprüche 11 bzw. 12 genannten Merkmale gelöst. Weiterbildungen sind in den Unteransprüchen 13 bis 16 gekennzeichnet.

Als Ausgangsstoffe im Sinne der Erfindung werden grundsätzlich alle in die Einrichtung eingebrachten Stoffe verstanden. Das können pulverförmige Stoffe sein, aus denen, insbesondere im Zusammenwirken mit einem Bindemittel, unter Anwendung der erfindungsgemäßen Einrichtung nach Anspruch 11 Basiskerne in Form eines Granulates hergestellt werden. In einer Anwendung der Einrichtung nach Anspruch 12 kann auf diese Basiskerne oder beliebige andere Kerne eine Hüllschicht aus gleichen oder anderen Ausgangsstoffen aufgebaut werden.

Als "andere" Kerne können z. B. Granulate, Pellets, Körner, Samenkörner, Tabletten, Pillen u.ä. beschichtet werden. Dabei können die Kerne homogen oder ein Agglomerat sein oder ein Kern, der bereits vorher mit einer oder mehreren Schichten beschichtet wurde.

Eine Beschichtung ist eine Schicht, die auf einem Kern aufgebaut oder abgeschieden wird, derart dass der Kern weitgehend gleichmäßig umschlossen wird.

Die Beschichtung kann aus einem Stoff, einer Flüssigkeit oder Dispersion, oder aus einem Gemisch mehrerer Stoffe, z. B. aus einer Zusammenballung (Schneeballeffekt) eines pulverförmigen Ausgangsmaterials und einem flüssigen Bindemittel, aufgebaut werden. Das pulverförmige Ausgangsmaterial kann dabei ein homogenes Material oder ein Gemisch mehrerer Materialien sein. Vielfach handelt es sich um einen neutralen Stoff, der lediglich dazu dient, in Zusammenballung mit dem flüssigen Bindemittel, den Kern zu umhüllen und dabei dem Produkt eine möglichst gleichmäßige Form von gleicher Abmessung zu geben. Das pulverförmige Ausgangsmaterial wie das Bindemittel können auch für den vorgesehenen Einsatzzweck bestimmte Wirkstoffe beinhalten.

Zur Vereinfachung der weiteren Darstellung der Erfindung werden die Basiskerne wie die "anderen" selbständigen Kerne im Folgenden allgemein nur als Kerne bezeichnet und als Ausgangsstoffe werden danach die Ausgangsstoffe verstanden, die zur Bildung der Basiskerne oder zum Aufbringen einer Hüllschicht auf vorhandene Kerne in die Einrichtung eingebracht werden.

Das Wesen der Erfindung besteht darin, dass die Ausgangsstoffe, insbesondere die eingesetzten Kerne sowie letztendlich das fertige schüttfähige Produkt selbst, von dem Rotor in eine spezifische Umwälzbewegung versetzt werden.

Durch den Rotor werden die Ausgangsstoffe bzw. die Kerne in eine radial-tangentiale Bewegungsrichtung versetzt, die im äußeren Bereich des Rotors und in der Nähe der Wandung der Rotorkammer in eine vertikal-tangentiale Richtung verändert wird.

In der Folge verlassen die Kerne den Wirkbereich des Rotors mit einer kinetischen Energie, die ausreicht, dass die Kerne auf den statisch an der Rotorkammer angeordneten Leitschaufeln entlang rollen und dabei zwangsweise ihre Bewegungsrichtung entsprechend der Form der Leitschaufeln ändern und im Wesentlichen umgelenkt werden und in den Rotor zurückfallen.

Die radial-tangentiale Bewegungsrichtung der Kerne ist mindestens im radial äußeren Drittel des Rotors in einem Winkel zwischen 10° und 80° zur Rotationsachse nach oben geneigt, bis die Kerne an der Wand der Rotorkammer den Rotor mit kinetischer Energie vertikal-tangential nach oben verlassen. Die praktisch vorteilhafte Neigung wird jeweils durch die Masse der Kerne bzw. der schüttfähigen Produkte in Verbindung mit dem Durchmesser des Rotors und dessen Drehzahl bestimmt.

Die Kerne werden insgesamt in eine spezifische intensive, im Wesentlichen stoßfreie Umwälzung versetzt, bei der die Kerne und insbesondere die auf den Kernen aufwachsenden Hüllschichten keinen nachteiligen Druck- und Stoßbelastungen ausgesetzt sind.

Erfindungsgemäß sind die Leitschaufeln oberhalb der Ebene des oberen Randes des Rotors statisch an der Innenwand der Rotorkammer angeordnet. Im Querschnitt zur Rotorachse weisen sie im Wesentlichen die Form eines Segmentes eines Kreises oder einer Spirale auf. Die äußeren Enden der Segmente treten in Drehrichtung des Rotors aus dem Kreis der inneren Wandung der Rotorkammer heraus, wobei die Tangenten der inneren Wandung und der Leit-schaufeln am Berührungspunkt im Wesentlichen die gleiche Neigung aufweisen. Die inneren Enden der Segmente liegen etwa im mittleren Teil des Rotorradius.

Durch diese spezifische Gestaltung kann das umwälzende Produkt, insbesondere mit empfindlichen Hüllschichten, weitgehend stoßfrei unter dem Einfluss der kinetischen Energie auf dem Rotor abrollen, diesen verlassen und an der Innenseite der Leitschaufeln abrollen bis es in den Rotor zurückfällt.

Die Kerne treffen insbesondere nicht auf kantige Einbauteile, z. B. an Umwälz-Hindernissen, wie sie nach dem Stand der Technik verwendet werden.

Die Kerne rollen intensiv und gleichmäßig an den Leitschaufeln und gegeneinander ab, so dass sie im Wesentlichen allseitig gleichen Druckbelastungen ausgesetzt sind und sich eine gleichmäßige Beschichtung ausbildet.

Bei dickeren Hüllschichten als Beschichtung kann es auch vorteilhaft sein, in Abhängigkeit von der Rollfähigkeit der Kerne, die Leitschaufeln spezifisch zu variieren, damit die Kerne entsprechend Ihrer Masse und Größe in eine vorteilhafte Umwälzung versetzt werden. Z.B. können die vertikalen Flächen der Leitschaufeln mindestens teilweise zur Senkrechten geneigt angeordnet sein.

In der Ausführung nach Anspruch 2 kann die Form der kreis- bzw. spiralförmigen Segmente der Leitschaufeln auch durch eine Verstelleinrichtung verändert werden. Dazu können die Leitschaufeln mehrfach geteilt sein. Im Falle einer Verstellung werden dann einzelne oder alle Teile der Leitschaufeln derart zueinander verändert, dass eine andere Gesamtform der kreis- bzw. spiralförmigen Segmente ausgebildet wird.

Mit einer derartigen Einrichtung kann bei einer Veränderung der Masse sehr vorteilhaft die Rollbewegung der beschichteten Kerne bzw. Produkte optimiert werden.

Zu Beginn der Herstellung von Basiskernen oder einer Beschichtung haben die einzelnen Elemente der Ausgangsstoffe wesentlich geringere Massen als zum Ende der Herstellung eines schüttfähigen Pruduktes. Damit ändern sich auch die spezifischen Rollbedingungen. Durch eine Änderung der Geometrie der Leitschaufeln auch in Verbindung mit einer Veränderung der Drehzahl des Rotors kann sehr vorteilhaft auf eine optimale Rollbewegung eingewirkt werden. Eine derartig ausgebildete Einrichtung kann auch als Universalanlage vorteilhaft für die wahlweise Herstellung sehr unterschiedlicher schüttfähiger Produkte eingesetzt werden.

Die Zuführung verschiedenartiger Ausgangsstoffe, z. B. eines pulverförmigen Ausgangsstoffes und/oder eines flüssigen Bindemittels, erfolgt grundsätzlich in einem abgestimmten Regime zu den in Umwälzung befindlichen Kernen. Die Ausgangsstoffe werden so dosiert, dass sie sich unmittelbar nach der Zuführung direkt als Hüllschicht auf den Kernen aufbauen. Das flüssige Bindemittel befeuchtet die Kerne bzw. die Oberfläche der teilbeschichteten Kerne und der pulverförmige Ausgangsstoff haftet dann auf dieser feuchten Oberfläche. Dadurch wird gesichert, dass sich keine Agglomerate der Ausgangsstoffe für die Hüllschicht ohne einen Kern ausbilden können.

Sollen generell in einer ersten Stufe Basiskerne hergestellt werden, ist die Verfahrensführung sehr vom Ausgangsmaterial abhängig. Einerseits kann es möglich sein, dass das Ausgangsmaterial in Form von allein durch die Rollbewegung granuliert oder pilliert werden. In der Regel wird jedoch einem Pulver eine gerinfügige Menge Bindemittel, z. B. Wasser, zugegeben, damit sich um die Tropfen des Bindemittels die Basiskerne ausbilden. In der Folge kann dann auf die Basiskerne weiteres Ausgangsmaterial in der Art einer Beschichtung aufgebracht werden.

Wenn es verfahrenstechnisch vorteilhaft ist, das schüttfähige Produkt während und/oder nach der Beschichtung zu trocknen, können in einer Ausführung nach Anspruch 4 in dem Kegelmantel mindestens teilweise flächige Gasdurchlässe in Form von Lochungen oder Sieben angeordnet werden. Über geeignete Zuführungseinrichtungen kann von unten ein Trockengas durch die Gasdurchlässe geleitet werden.

Damit werden die Kerne sehr wirksam, praktisch an jedem Ort, von dem Trockengas umströmt. Die Art und die Strömungsgeschwindigkeit des Trockengases sowie dessen Temperatur wird maßgeblich von den spezifischen Bedingungen des jeweiligen Produktes beeinflusst.

Grundsätzlich ist die erfindungsgemäße Einrichtung als Chargenanlage konzipiert, da die Herstellung der schüttfähigen Produkte eine gewisse Zeit lang die Wirkung der spezifischen Umwälzung erfordert. Es ist aber auch möglich, die Einrichtung als Intervall-Durchlaufanlage zu betreiben. D.h. die Ausgangsstoffe bzw. die Kerne und die Ausgangsstoffe für den Aufbau der Hüllschicht darauf werden in Intervallen der Rotorkammer zugeführt und nach entsprechender Prozessdauer aus dieser wieder ausgeschleust.

Zur Ausschleusung des Produktes aus der Einrichtung hat sich eine Lösung bewährt, bei der sich in der Wand der Rotorkammer oberhalb des Rotors und vorzugsweise innerhalb einer Leitschaufel, mindestens eine Klappe befindet, die geeignet ist, dass die Produkte, bei geöffneter Stellung der Klappe und bei drehendem Rotor, durch die Fliehkräfte aus der Rotorkammer hinausbewegt werden.

Es ist beispielsweise auch möglich, dass das fertige Produkt mit einem von oben in die Rotorkammer eingebrachten Saugrohr abgesaugt wird.

Der Vorteil der Erfindung besteht insbesondere darin, dass in einfacher und schonender Weise sehr effektiv schüttfähige Produkte der unterschiedlichsten Art ungetrocknet oder getrocknet hergestellt werden können.

Die Herstellung der schüttfähigen Produkte, sowohl bei der Herstellung einfacher Granulate wie beim Aufbau komplizierter und empfindlicher Hüllschichten, mit der erfindungsgemäßen Einrichtung führt zu einem Produkt mit einer überraschend gleichmäßigen äußeren Form. Je nach der Form der Kerne und der gewählten Dicke der Hüllschicht weisen die Produkte eine sphärische oder eine davon abweichende Form auf. Wenn z. B. längliche Kerne beschichtet werden, dann wird das Produkt nur sphärisch, wenn eine relativ dicke Hüllschicht aufgebracht wird. Wenn das nicht gewünscht ist, dann wird bei geringerer Dicke der Hüllschicht auch das Produkt noch eine längliche Form aufweisen.

Von besonderem Vorteil ist, dass jegliche höhere Stoßoder Druckbelastung der einzelnen Produktteilchen bei der Anwendung der erfindungsgemäßen Einrichtung vermieden wird. Dadurch kommt es bei teilbeschichteten Kernen auch nicht zu dem meist sehr nachteiligen Abschlagen von Beschichtungsmaterial. Derartige Zerstörungen von teilbeschichteten Kernen treten beim Stand der Technik z.B. dadurch auf, dass die Leiteinrichtungen mit ihren Kanten in das umwälzende Gut eingreifen. In der Folge können die abgeschlagenen Beschichtungsstoffe ein gesondertes Granulat ohne Kern bilden. Ein solches Granulat ist dann schädlich bzw. nachteilig, wenn der Kern eine Funktion hat, z.B. ein Saatkorn ist. Bei der Aussaat entsteht eine Fehlstelle mit einem entsprechenden Ernteverlust.

Die Erfindung soll nachstehend an zwei Ausführungsbeispielen näher erläutert werden.

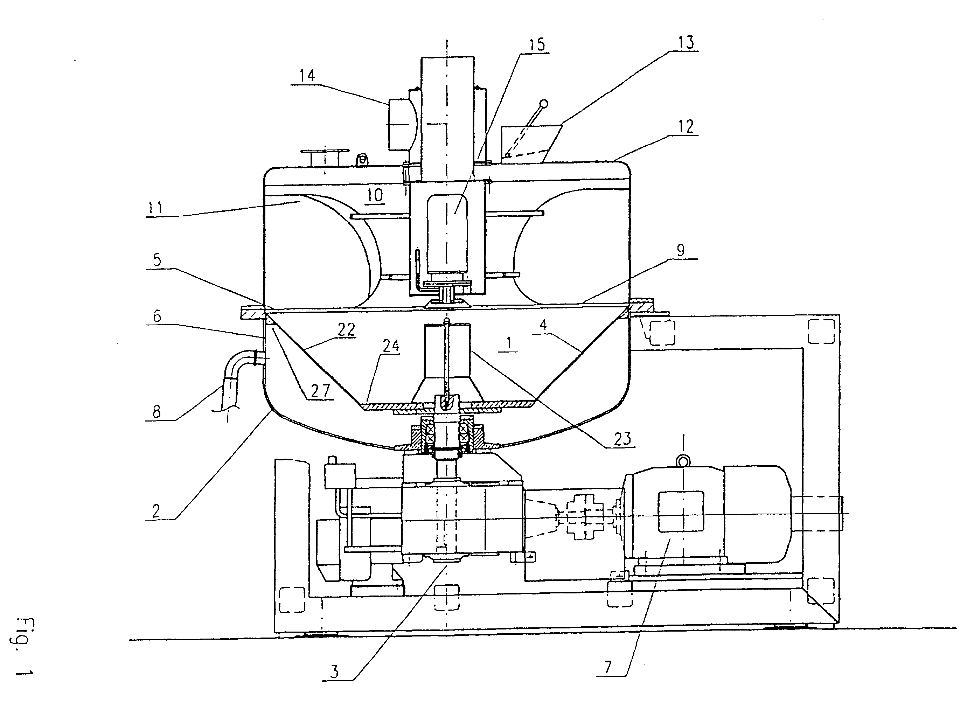

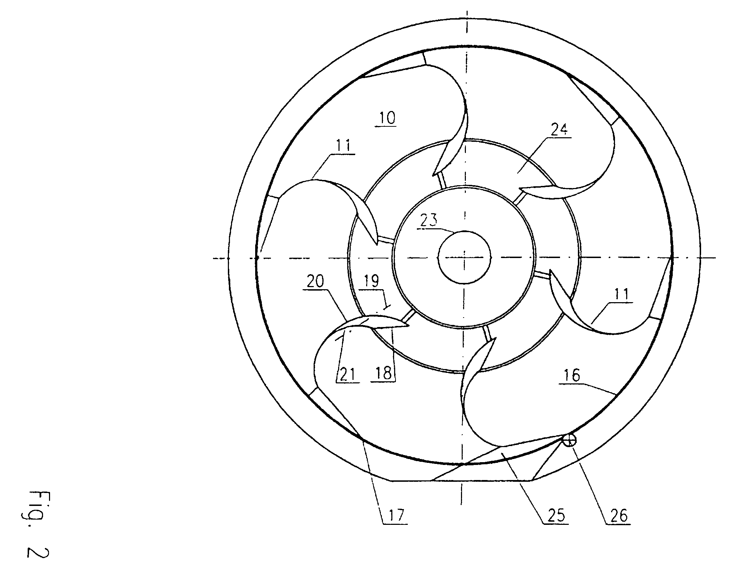

Die zugehörige Zeichnung zeigt in Figur 1 eine erfindungsgemäße Einrichtung in einer schematischen Schnittdarstellung. Figur 2 zeigt einen horizontalen Schnitt oberhalb der Leitschaufeln 11 gemäß Figur 1.

### Ausführungsbeispiel I

Im Ausführungsbeispiel I sollen beispielsweise Samenkörner von relativ unterschiedlicher Größe und unterschiedlich ausgebildeter Form mit einer Hüllschicht beschichtet werden. Die Samenkörner, im Beispiel als Kerne bezeichnet, können in äqivalenter Weise auch Güter der chemischen Industrie, der Lebensmittel- oder Futtermittelindustrie, der Agrartechnik, der Pharmazie o. ä. Industriezweigen sein.

Die Forderungen gegenüber der Beschichtung werden im Wesentlichen davon bestimmt, dass die beschichteten Kerne als Produkt in der Folge einzeln transportiert, behandelt oder verpackt werden sollen. Das Problem besteht darin, dass in der modernen Industrie dafür Hochleistungsmaschinen eingesetzt werden, die mit hoher Geschwindigkeit arbeiten, was wiederum eine hohe Gleichmäßigkeit der zu verarbeitenden oder zu transportierenden Produkte erfordert.

Damit die Verpackungsmaschinen diese Aufgabe erfüllen können, müssen alle einzelnen Produktelemente die gleiche sphärische Außengeometrie aufweisen, sonst kann es passieren, dass sich das einzelne Produkt, der mit einer Hüllschicht versehene Kern, in der Maschine verklemmt, wodurch Störungen verursacht werden können.

Figur 1 zeigt die erfindungsgemäße Einrichtung im Schnitt. Die Einrichtung besteht aus einer Rotorkammer 1 mit einem unteren Gehäuse 2, in dem zentrisch in einer vertikalen Rotorachse 3 ein teilweise kegelförmig ausgebildeter Rotor 4 angeordnet ist.

Der zentrische Teil des Rotors 4 ist mit einer zentrischen Rotorhülse 23 abgedeckt. Der radial anschließende Abschnitt 24 ist horizontal ausgebildet. Etwa in der Mitte des Radius beginnt ein Kegelmantel 22 mit einem Neigungswinkel von 50° zur Rotorachse 3.

Der obere Rand 5 des Rotors 4 reicht bis dicht an die innere Wandung 6 des unteren Gehäuses 2 heran, so dass ein Ringspalt gebildet wird. Im Beispiel ist der Rotor 4 höhenverstellbar ausgebildet und an der Wandung 6 ist koaxial zur Rotorachse 3 ein kurzer Konus 27 vorhanden. Damit ist es möglich, den Ringspalt und damit die Durchlassbreite für ein Trockengas zwischen Rotor 4 und Wandung 6 zu variieren. Unterhalb des Rotors 4 sind im unteren Gehäuse 2 zwei Gaseinlässe 8 vorhanden, über die in die Rotorkammer 1 ein Gas oder spezifisch ein Trockengas eingelassen werden kann. Ein elektromotorischer Antrieb 7 für den Rotor 4 befindet sich unterhalb des unteren Gehäuses 2.

Der obere Rand 5 des Rotors 4 und die obere Kante des unteren Gehäuses 2 liegen im Wesentlichen in einer Ebene 9. Oberhalb dieser Ebene 9 ist ein Leitschau-felring 10 angeordnet, wie er in Figur 2 in der Draufsicht (Schnitt oberhalb der Leitschaufeln 11 gemäß Figur 1) näher dargestellt ist. Zur besseren Übersichtlichkeit sind in Figur 1 nur zwei Leitschaufeln 11 angedeutet.

Oberhalb des Leitschaufelringes 10 befindet sich das obere Gehäuse 12, welches die Rotorkammer 1 nach oben abschließt. Im oberen Gehäuse 12 befinden sich eine Zuführungsöffnung 13 für die zu beschichtenden Kerne, eine Zuführung 14 für ein trockenes Ausgangsmaterial und eine zentrische Zuführung 15 für ein flüssiges Bindemittel.

Im Beispiel sind (Figur 2), bei einem Durchmesser des Leitschaufelringes 10 von ca. 1500 mm, sechs Leitschaufeln 11 angeordnet. Die Leitschaufeln 11 haben etwa die Höhe des Leitschaufelringes 10, wobei die äußere Kante 17 stufen- und kantenfrei an die innere Wandung 16 des Leitschaufelringes 10 angeformt, d. h. in der praktischen Ausführung angeschweißt und verschliffen, sind.

Die Leitschaufeln 11 weisen im Beispiel die Form eines Segmentes einer Spirale auf, wobei die äußere Kante 17 der polferne Punkt und die innere Kante 18 der polnahe Punkt des Segmentes der Spirale sind. Dabei erfüllt die Anformung der Spirale an die innere Wandung 6 im Wesentlichen die theoretische Forderung, dass die äußeren Enden der Leitschaufeln 11 in Drehrichtung des Rotors 4 aus dem Kreis der inneren Wandung 6 der Rotorkammer 1 derart heraustreten, dass die Tangenten der inneren Wandung 6 und der Leitschaufeln 11 am Berührungspunkt im Wesentlichen die gleiche Neigung aufweisen.

Die inneren Enden der Leitschaufeln 11, die Kanten 18, befinden sich etwa im mittleren Teil des Rotorradius.

Als vorteilhaft hat es sich erwiesen, wenn die vertikale Linie 19 etwa in der Mitte der Leitschaufeln 11 eine leichte Schrägstellung gegenüber der Lotrechten aufweist, derart dass die untere Kante 20 der Leitschaufeln 11 in Drehrichtung des Rotors 4 weiter ausgeformt ist als die obere Kante 21.

Zum Zwecke der Ausschleusung des fertigen Produktes aus der Rotorkammer 1 befindet sich in einer Leitschaufel 11 eine Ausschleusungsöffnung, die in der Verfahrensphase der Beschichtung durch eine Klappe 25 kanten- und spaltfrei verschlossen ist. Die Klappe 25 kann um den Drehpunkt 26 geschwenkt werden, wodurch die Ausschleusungsöffnung freigegeben wird.

Die erfindungsgemäße Einrichtung soll nachfolgend unter Anwendung des erfindungsgemäßen Verfahrens nach Anspruch 12 in der Funktion näher beschrieben werden.

Wie bereits erwähnt, sollen Samenkörner gleichmäßig mit einer Hüllschicht beschichtet werden, so dass ein schüttfähiges Produkt mit einer gleichmäßigen sphärischen äußeren Form gebildet wird. Die Hüllschicht wird aus einem pulverförmigen Ausgangsmaterial und einem flüssigen Bindemittel aufgebaut.

Die Einbringung der zu beschichtenden Kerne in die Rotorkammer 1 erfolgt bei laufendem Rotor 4 im Ausführungsbeispiel chargenweise über die Zuführungsöffnung 13. Unmittelbar nach dem Auftreffen der Kerne auf dem Rotor 4 werden diese in eine radial-tangentiale und durch den Kegelmantel 22 im äußeren Rotorabschnitt zunehmend in eine vertikal-tangentiale Bewegungsrichtung versetzt.

Die Ausgangsstoffe zum Aufbau der Hüllschicht werden in der Folge langsam und parallel über die Zuführungen 14 bzw. 15 in die Rotorkammer 1 den Kernen zugeführt. Dabei wird über die Zuführung 14 im Ausführungsbeispiel pulverförmige Cellulose und über die zentrische Zuführung 15 flüssige Methylcellulose als Bindemittel eingebracht. Die Zuführung 14 ist schaufelartig ausgebildet, wodurch die pulverförmige Cellulose linienartig oberhalb des Rotors 4 auf die sich in Umwälzung befindlichen Kerne aufgebracht wird.

Die zentrische Zuführung 15 weist eine zentrisch rotierende Schleuderscheibe auf, die die als Bindemittel eingesetzte Methylcellulose kreisringförmig auf die Kerne verteilt. Durch Veränderung der Drehzahl der Schleuderscheibe, z. B. eine sinusförmige Drehzahländerung, kann die praktische Auftrefffläche wesentlich vergrößert werden.

Unterhalb des Rotors 4 wird bereits vor dem Einbringen der Kerne über die beiden Gaseinlässe 8 ein Trockengas eingeleitet, welches insbesondere die Aufgabe hat, den Ringspalt zwischen dem oberen Rand 5 des Rotors 4 und der inneren Wandung 6 des unteren Gehäuses 2 von Hüllmaterial freizuhalten, indem über diesen Spalt ein ständiger Luftstrom in den Raum über dem Rotor 4 strömt. Des weiteren führt dieser Gasstrom in bekannter Weise auch zu einer relativ geringen Trocknung des Produktes.

In einer Ausführungsvariante nach Anspruch 4 ist der Kegelmantel 22 aus Lochblech gefertigt und weist bis auf Randbereiche eine gleichmäßige Lochung mit 1 mm Durchmesser auf. Dadurch kann das Trockengas zusätzlich zum Ringspalt zwischen dem Rotor 4 und der inneren Wandung 6 zu einem wesentlich größeren Teil über die Lochung im Kegelmantel 22 des Rotors 4 durch das umwälzende Produkt strömen. In diesem Fall wird eine besonders wirksame Trocknung während der Herstellung des Produktes, z. B. zur Antrocknung des Hüllmaterials oder nach Abschluss der Herstellung des Produktes zur Endtrocknung, erzielt.

Durch die zentrische Rotorhülse 23 und den radial anschließenden horizontalen Abschnitt 24 des Rotors 4 wird gesichert, dass an jeder Stelle des Rotors die Fliehkraft stets größer ist als die Adhäsionskräfte der Ausgangsstoffe bzw. bereits teilbeschichtete Kerne untereinander und zum Rotor 4. Wenn die Rotorhülse 23 nicht vorhanden ist, kann die Rotationskraft im Zentrum des Rotors 4 theoretisch den Wert Null haben und es kann zum Zusammenbacken von teilbeschichteten Kernen kommen.

Die Drehzahl des Rotors 4 wird so gewählt, dass die Kerne durch die kinetische Energie über den oberen Rand 5 des Rotors 4 hinaus bis in den Leitschaufelring 10 bewegt werden. Die Kerne bzw. die teilbeschichteten Kerne gelangen dabei in den Wirkbereich der Leitschaufeln 11 und rollen in der Folge schlag- und stoßfrei an der inneren Oberfläche der Leitschaufeln 11 entlang, wobei die vertikal-tangentiale Bewegungsrichtung der Kerne beim Eintritt in den Wirkbereich der Leitschaufeln 11 im Wesentlichen umgelenkt und gleichzeitig mit einer zentrischen Richtung überlagert wird. Nach dem Verlassen der Leitschaufeln 11 fallen die Kerne wieder in den Rotor 4, gelangen erneut in den Einfluss des Rotors 4 und der Kreislauf beginnt erneut.

Durch die erfindungsgemäße Verfahrensführung in der spezifischen erfindungsgemäßen Einrichtung kommt es zu einer außerordentlich gleichmäßigen, intensiven Umwälzung der Kerne. Die Kerne wälzen sich an der Einrichtung aber auch untereinander ab und es kommt zum Aufbau einer dichten und gleichmäßigen Hüllschicht, wobei die Außenmaße aller Produktelemente die gleiche Größe aufweisen. Entgegen der Lösungen nach dem Stand der Technik kommen die Kerne im gesamten Umwälzprozess mit keinen Flächen oder Kanten von Einbauteilen in eine Stoß- oder Schlagberührung.

Die Bewegung der Kerne variiert natürlich sehr stark, je nachdem, ob die Kerne im unteren Bereich der Leitschaufeln oder mehr im oberen Bereich umgewälzt werden. Der grundsätzliche Bewegungsablauf bleibt jedoch stets der gleiche.

In der beschriebenen intensiven Umwälzung, bei der jeder einzelne Kern bzw. teilbeschichtete Kern an den Einrichtungsteilen und an den benachbarten teilbeschichteten Kernen abrollt, führt jeder einzelne eine Eigenbewegung aus, derart dass nach dem Prinzip des kleinsten Volumens bei maximaler Masse alle Produktelemente die gleichen Außenmaße aufweisen. Dickere Beschichtungen auf den Kernen werden wieder abgeschliffen und an kleineren teilbeschichteten Kernen wird Hüllmaterial weiter aufgebaut.

Nach Erreichen der technologisch erforderlichen Parameter wird die Zufuhr der Ausgangsstoffe beendet. Der Prozess der Umwälzung kann unter Einwirkung des Trockengases weiter fortgesetzt werden, bis die Hüllschicht den erforderlichen Trockengrad aufweist.

### Ausführungsbeispiel II

Im Ausführungsbeispiel II soll aus Pulverzucker ein Zukker-Granulat in Form von Kugeln mit einem mittlerem Durchmesser von 0,5 mm hergestellt werden. Ein derartiges Zucker-Granulat wird in der Pharmaindustrie in vielfältiger Weise als Kern für spezifische Präparate benötigt, auf die z. B. flüssige Wirkstoffe als Hüllschichten aufgebracht werden.

Zur Herstellung des Zucker-Granulates wird ebenfalls die Einrichtung entsprechend dem Ausführungsbeispiel I eingesetzt. In außerordentlich einfacher Weise wird Puderzucker durch die Zuführung 14 in den Rotor 4 eingefüllt. Parallel oder nachfolgend wird fein zerstäubtes Wasser über die zentrische Zuführung 15 auf den umwälzenden Puderzucker aufgesprüht. Die feinen Wassertropfen werden sofort vom Puderzucker umschlossen und es bildet sich ein Basiskern aus. Die Größe der Basiskerne kann durch die Drehzahl und die Geometrie der Leitschaufeln sowie der Menge und Größe der Tropfen des zugeführten Wassers beeinflusst werden. Die im Beispiel vorbestimmten Basiskerne mit 0,5 mm Durchmesser werden in sehr kurzer Zeit hergestellt. Je nach den technologischen Gegebenheiten ist damit das gewünschte schüttfähige Produkt hergestellt oder es wird unmittelbar nachfolgend auf den Basiskern aus Zucker-Granulat noch eine Hüllschicht mit bestimmten Wirkstoffen aufgebaut.
Die Einrichtung und das Verfahren können unter Anwendung der Lösungen nach den jeweiligen Unteransprüchen noch in einem relativ weiten Umfang variiert werden, insbesondere die Hüllschicht kann an technologisch fuktionelle Erfordernisse angepaßt werden.

Die Erfindung kann auch ähnlich dem Ausführungsbeispiel in umfassenderer Weise zum Aufbau mehrerer unterschiedlicher Schichten gleicher oder verschiedener Art eingesetzt werden. Die Art der Kerne sowie die Art und Struktur der Hüllschicht können in weiten Bereichen variiert werden. Beispielsweise können Tabletten mit mehreren funktionellen Hüllschichten für unterschiedliche Zwecke und Ziele beschichtet werden. Auch ist möglich, erforderliche Kerne zuerst als Granulate herzustellen und diese nachfolgend mit einer Beschichtung zu versehen. Abschließend kann das Produkt in der gleichen Einrichtung abschließend getrocknet werden.

| Liste der verwendeten Bezugszeichen | | | |
|---|---|---|---|
| 1 | Rotorkammer | 2 | unteres Gehäuse |
| 3 | vertikale Rotorachse | 4 | Rotor |
| 5 | oberer Rand | 6 | innere Wandung |
| 7 | elektromotorischer Antrieb | 8 | Gaseinlass |
| 9 | Ebene | 10 | Leitschaufelring |
| 11 | Leitschaufel | 12 | oberes Gehäuse |
| 13 | Zuführungsöffnung | 14 | Zuführung |
| 15 | zentrische Zuführung | 16 | innere Wandung |
| 17 | äußere Kante | 18 | innere Kante |
| 19 | vertikale Linie | 20 | untere Kante |
| 21 | obere Kante | 22 | Kegelmantel |
| 23 | zentrische Rotorhülse | 24 | horizontaler Abschnitt |
| 25 | Klappe | 26 | Drehpunkt |
| 27 | Konus | 28 | |
| 29 | | 30 | |

## Patentansprüche

1. Einrichtung zur Herstellung eines schüttfähigen Produktes bestehend aus einer Rotorkammer (1), in der mit vertikaler Rotorachse (3) ein Rotor (4) angeordnet ist, welcher eine zentrische horizontale Fläche und mindestens in seinem radial äußeren Drittel die Form eines Kegelmantels (22) mit einer Neigung zur Rotorachse (3) nach außen und oben zwischen 10° und 80° aufweist, Zuführungen (13, 14, 15) zum Einbringen der Ausgangsstoffe für das schüttfähige Produkt sowie Leitschaufeln (11) zur Umwälzung der Ausgangsstoffe bzw. des Produktes, die oberhalb der Ebene (9) des oberen Randes (5) des Rotors (1) statisch an der inneren Wandung eines als Verlängerung der Wandung (6) des Gehäuses ausgebildeten Leitschaufelringes (10) angeordnet sind, wobei die Leitschaufeln (11) etwa die Höhe des Leitschaufelringes (10) aufweisen und im Querschnitt zur Rotorachse (3) im Wesentlichen in der Form eines Segmentes eines Kreises oder einer Spirale ausgebildet sind, deren äußere Enden in Drehrichtung des Rotors (4) aus dem Kreis der inneren Wandung (6) der Rotorkammer (1) heraustreten, derart dass die Tangenten der inneren Wandung (6) und der Leitschaufeln (11) am Berührungspunkt im Wesentlichen die gleiche Neigung aufweisen, und deren innere Enden etwa im mittleren Teil des Rotorradius liegen, so dass das umwälzende Produkt, welches unter dem Einfluss der kinetischen Energie den Rotor (4) verlässt, an der Innenseite der Leitschaufel (11) abrollt und in den Rotor (4) zurückfällt.

2. Einrichtung nach Anspruch 1, **dadurch gekennzeichnet, dass** die einzelnen Leitschaufeln mehrteilig ausgeführt sind und eine Verstelleinrichtung vorhanden ist, mit der die Lage der einzelnen Teile zueinander verändert werden kann und die Form der Segmente des Kreises bzw. der Spirale insgesamt verändert werden kann.

3. Einrichtung nach Anspruch 1 oder 2, **dadurch gekennzeichnet, dass** die vertikalen Flächen der Leitschaufeln (11) mindestens teilweise geneigt sind.

4. Einrichtung nach einem der Ansprüche 1 bis 3, **dadurch gekennzeichnet, dass** im Kegelmantel (22) mindestens teilweise Lochungen oder Siebe vorhanden sind, an die von unten ein Trockengas herangeführt werden kann.

5. Einrichtung nach einem der Ansprüche 1 bis 4, **dadurch gekennzeichnet, dass** der Kegelmantel (22) und/oder der Rotor (4) austauschbar angeordnet sind bzw. ist.

6. Einrichtung nach einem der Ansprüche 1 bis 5, **dadurch gekennzeichnet, dass** als Einrichtungen zur Zuführung der Ausgangsstoffe für das schüttfähige Produkt oberhalb des Rotors (4) in der Rotorkammer (1) mindestens eine Zuführung (14) für einen pulverförmigen Ausgangsstoff und/oder mindestens eine Zuführung (15) für ein flüssiges Bindemittel vorhanden sind.

7. Einrichtung nach Anspruch 6, **dadurch gekennzeichnet, dass** die Zuführungen (14, 15) für den pulverförmigen Ausgangsstoff und/oder das Bindemittel derart gestaltet sind, dass die Stoffe flächig in die Rotorkammer (1) eingebracht werden.

8. Einrichtung nach einem der Ansprüche 1 bis 7, **dadurch gekennzeichnet, dass** der Rotor (4) und die Rotorkammer (1) zueinander einen Ringspalt bilden, dass der Rotor (4) innerhalb der Rotorkammer (1) axial verschiebbar gelagert ist und dass an der Rotorkammer (1) im Bereich des oberen Randes (5) des Rotors (4) ein Konus (27) vorhanden ist, derart dass bei einer vertikalen Verschiebung des Rotors (4) die Durchlassbreite des Ringspaltes variiert werden kann.

9. Einrichtung nach einem der Ansprüche 1 bis 8, **dadurch gekennzeichnet, dass** in einer oder mehreren Leitschaufeln (11) und in der Nähe der Wandung (6) der Rotorkammer (1) eine verschließbare Öffnung vorhanden ist, durch die bei geöffneter Stellung und bei drehendem Rotor (4) die Produkte durch die Fliehkräfte aus der Rotorkammer (1) hinausbewegt werden.

10. Einrichtung nach einem der Ansprüche 1 bis 8, **dadurch gekennzeichnet, dass** ein Saugrohr vorhanden ist, welches von oben in den Innenraum des Rotors (4) eingebracht werden kann und mit dem das fertige Produkt aus der Rotorkammer (1) abgesaugt werden kann.

11. Verfahren zur Anwendung einer Einrichtung nach einem der Ansprüche 1 bis 10, **dadurch gekennzeichnet, dass** ein oder mehrere pulverförmige Ausgangsstoff in die rotierende Einrichtung eingebracht werden und insbesondere unter Zusetzung eines Bindemittels ein schüttfähige Produkt in Form von Basiskernen hergestellt wird.

12. Verfahren zur Anwendung einer Einrichtung nach einem der Ansprüche 1 bis 10, **dadurch gekennzeichnet, dass** Kerne in die rotierende Einrichtung eingebracht werden und nachfolgend oder parallel weitere pulverförmige und/oder flüssige und/oder suspensionsartige Ausgangsstoffe zur Ausbildung einer Hüllschicht auf den Kernen zugeführt werden.

13. Verfahren zur Anwendung einer Einrichtung nach einem der Ansprüche 11 oder 12, **dadurch gekennzeichnet, dass** während bzw. nach der Herstellung eines schüttfähigen Produktes ein Trocknungsgas durch die Lochungen oder Siebe im Kegelmantel (22) des Rotors (4) eingelassen wird.

14. Verfahren zur Anwendung einer Einrichtung nach einem der Ansprüche 11 oder 12, **dadurch gekennzeichnet, dass** die Fliehkraft der Ausgangsstoffe bzw. des schüttfähigen Produktes mittels zentrischer Begrenzung des Umwälzraumes im Rotor (4), stets größer eingestellt wird als die Adhäsionskräfte der Ausgangsstoffe bzw. der Produktteilchen untereinander und zum Rotor (4).

15. Verfahren zur Anwendung einer Einrichtung nach Anspruch 12, **dadurch gekennzeichnet, dass** die pulverförmigen und/oder flüssigen Ausgangsstoffe in der Menge und Zeiteinheit entsprechend dem technologischen Erfordernis derart zugeführt werden, dass sich die Beschichtung als pastöse Schicht aufbaut und dass die Drehzahl des Rotors (4) so bemessen wird, dass die Bewegungskräfte ein weitgehend freies Abrollen der Kerne bzw. schüttfähigen Produkte an den Einrichtungsbauteilen und untereinander gestatten und keine Deformierung der Hüllschicht erfolgt.

16. Verfahren nach einem der Ansprüche 12 bis 15, **dadurch gekennzeichnet, dass** nacheinander mehrere unterschiedliche Schichten mit unterschiedlichen Ausgangsstoffen und/oder Bindemitteln aufgebaut werden.

## Claims

1. Device for producing a pourable product, consisting of a rotor chamber (1), in which is arranged with a vertical rotor axis (3) a rotor (4) which has a central horizontal surface and, at least in its radially outer third, the shape of a cone shell (22) with an outward and upward inclination to the rotor axis (3) of between 10° and 80°, feeds (13, 14, 15) for introducing the starting materials for the pourable product and guide vanes (11) for circulating the starting materials or the product, which are arranged statically on the inner wall of a guide vane ring (10) formed as an extension of the wall (6) of the housing above the plane (9) of the upper edge (5) of the rotor (1), the guide vanes (11) having approximately the height of the guide vane ring (10) and being formed, in cross section to the rotor axis (3), essentially in the shape of a segment of a circle or of a spiral, the outer ends of which emerge from the circle of the inner wall (6) of the rotor chamber (1) in the direction of rotation of the rotor (4), in such a way that the tangents of the inner wall (6) and of the guide vanes (11) at the contact point have essentially the same inclination, and the inner ends of which lie approximately in the middle part of the rotor radius, so that the circulating product, which leaves the rotor (4) under the influence of kinetic energy, rolls on the inside of the guide vane (11) and falls back into the rotor (4).

2. Device according to Claim 1, **characterized in that** the individual guide vanes are of multipart design and there is an adjusting means, by which the position of the individual parts relative to one another can be varied and the shape of the segments of the circle or of the spiral can be varied as a whole.

3. Device according to Claim 1 or 2, **characterized in that** the vertical surfaces of the guide vanes (11) are at least partially inclined.

4. Device according to one of Claims 1 to 3, **characterized in that** there are at least partially in the cone shell (22) perforations or screens, to which a dry gas can be led from below.

5. Device according to one of Claims 1 to 4, **characterized in that** the cone shell (22) and/or the rotor (4) are or is arranged exchangeably.

6. Device according to one of Claims 1 to 5, **characterized in that** the devices for feeding the starting materials for the pourable product are, above the rotor (4) in the rotor chamber (1), at least one feed (14) for a pulverulent starting material and/or at least one feed (15) for a liquid binder.

7. Device according to Claim 6, **characterized in that** the feeds (14, 15) for the pulverulent starting material and/or the binder are configured in such a way that the materials are introduced into the rotor chamber (1) in a sheet-like manner.

8. Device according to one of Claims 1 to 7, **characterized in that** the rotor (4) and the rotor chamber (1) form an annular gap relative to one another, **in that** the rotor (4) is mounted axially displaceably within the rotor chamber (1), and **in that** a cone (27) is present on the rotor chamber (1) in the region of the upper edge (5) of the rotor (4), in such a way that, in the event of a vertical displacement of the rotor (4), the passage width of the annular gap can be varied.

9. Device according to one of Claims 1 to 8, **characterized in that** there is in one or more guide vanes (11) and in the vicinity of the wall (6) of the rotor chamber (1) a closeable orifice, through which the products are moved out of the rotor chamber (1) by means of the centrifugal forces when said orifice is in the open position and when the rotor (4) is rotating.

10. Device according to one of Claims 1 to 8, **characterized in that** there is a suction tube which can be introduced into the inner space of the rotor (4) from above and by means of which the finished product can be sucked away from the rotor chamber (1).

11. Method for using a device according to one of Claims 1 to 10, **characterized in that** one or more pulverulent starting materials are introduced into the rotating device and, in particular with a binder being added, a pourable product in the form of basic cores is produced.

12. Method for using a device according to one of Claims 1 to 10, **characterized in that** cores are introduced into the rotating device and, subsequently or in parallel, further pulverulent and/or liquid and/or suspension-like starting materials are fed to the cores in order to form an enveloping layer.

13. Method for using a device according to either of Claims 11 and 12, **characterized in that** a drying gas is admitted through the perforations or screens in the cone shell (22) of the rotor (4) during or after the production of a pourable product.

14. Method for using a device according to either of Claims 11 and 12, **characterized in that** the centrifugal force of the starting materials or of the pourable product is always set higher, by means of the central limitation of the circulating space in the rotor (4), than the forces of adhesion of the starting materials or of the product particles to one another and to the rotor (4).

15. Method for using a device according to Claim 12, **characterized in that** the pulverulent and/or liquid starting materials are fed in the quantity and time unit according to the technological requirement, in such a way that the coating builds up as a pasty layer, and **in that** the rotational speed of the rotor (4) is dimensioned in such a way that the movement forces allow the cores or pourable products to roll essentially freely on the fittings of the device and among one another and no deformation of the enveloping layer occurs.

16. Method according to one of Claims 12 to 15, **characterized in that** a plurality of different layers having different starting materials and/or binders are built up in succession.

## Revendications

1. Dispositif pour la production d'un produit apte à l'écoulement se composant d'une chambre de rotor (1), dans laquelle est disposé, avec un axe de rotor vertical (3), un rotor (4) qui présente une surface horizontale centrale et au moins dans son tiers radial extérieur la forme d'une enveloppe conique (22) avec une inclinaison vers l'extérieur et vers le haut comprise entre 10° et 80° par rapport à l'axe (3) du rotor, des entrées (13, 14, 15) pour l'introduction des matières premières destinées au produit apte à l'écoulement ainsi que des aubes directrices (11) pour la circulation des matières premières, respectivement du produit, qui sont disposées au-dessus du plan (9) du bord supérieur (5) du rotor (1) de façon statique sur la paroi intérieure d'une couronne des aubes directrices (10) formant un prolongement de la paroi (6) de l'enceinte, dans lequel les aubes directrices (11) présentent environ la hauteur de la couronne des aubes directrices (10) et ont, en section transversale par rapport à l'axe (3) du rotor, sensiblement la forme d'un segment de cercle ou d'une spirale, dont les extrémités extérieures sortent, dans le sens de rotation du rotor (4), hors du cercle de la paroi intérieure (6) de la chambre de rotor (1), de telle manière que les tangentes à la paroi intérieure (6) et aux aubes directrices (11) au point de contact présentent sensiblement la même inclinaison, et dont les extrémités intérieures sont situées environ dans la partie moyenne du rayon du rotor, de telle manière que le produit en circulation, qui quitte le rotor (4) sous l'effet de l'énergie cinétique, roule sur la face intérieure des aubes directrices (11) et retombe dans le rotor (4).

2. Dispositif suivant la revendication 1, **caractérisé en ce que** les aubes directrices individuelles sont formées en plusieurs parties et **en ce qu'**il est prévu un dispositif de réglage, avec lequel la position des parties individuelles l'une par rapport à l'autre peut être modifiée et la forme des segments du cercle ou de la spirale peut être modifiée en bloc.

3. Dispositif suivant la revendication 1 ou 2, **caractérisé en ce que** les surfaces verticales des aubes directrices (11) sont au moins en partie inclinées.

4. Dispositif suivant l'une quelconque des revendications 1 à 3, **caractérisé en ce qu'**il y a au moins en partie, dans l'enveloppe conique (22), des perforations ou des tamis auxquel(le)s un gaz sec peut être amené par le bas.

5. Dispositif suivant l'une quelconque des revendications 1 à 4, **caractérisé en ce que** l'enveloppe conique (22) et/ou le rotor (4) sont/est monté(s) de façon remplaçable.

6. Dispositif suivant l'une quelconque des revendications 1 à 5, **caractérisé en ce que**, comme dispositifs pour l'entrée des matières premières destinées au produit apte à l'écoulement, il y a au-dessus du rotor (4) dans la chambre de rotor (1) au moins une entrée (14) pour une matière première pulvérulente et/ou au moins une entrée (15) pour un liant liquide.

7. Dispositif suivant la revendication 6, **caractérisé en ce que** les entrées (14, 15) pour la matière première pulvérulente et/ou le liant sont configurées de telle manière que les matières soient introduites à plat dans la chambre de rotor (1).

8. Dispositif suivant l'une quelconque des revendications 1 à 7, **caractérisé en ce que** le rotor (4) et la chambre de rotor (1) forment l'un par rapport à l'autre une fente annulaire, **en ce que** le rotor (4) peut être déplacé axialement à l'intérieur de la chambre de rotor (1) et **en ce qu'**il y a, dans la chambre de rotor (1) dans la région du bord supérieur (5) du rotor (4), un cône (27) tel que, lors d'un déplacement vertical du rotor (4), la largeur de passage de la fente annulaire puisse être modifiée.

9. Dispositif suivant l'une quelconque des revendications 1 à 8, **caractérisé en ce qu'**il y a, dans une ou plusieurs aubes directrices (11) et à proximité de la paroi (6) de la chambre de rotor (1), une ouverture pouvant être fermée par laquelle, en position ouverte et avec le rotor (4) en rotation, les produits sont éjectés hors de la chambre de rotor (1) par les forces centrifuges.

10. Dispositif suivant l'une quelconque des revendications 1 à 8, **caractérisé en ce qu'**il y a un tube d'aspiration, qui peut être introduit par le haut dans l'espace intérieur du rotor (4) et par lequel le produit terminé peut être aspiré hors de la chambre de rotor (1).

11. Procédé pour l'utilisation d'un dispositif suivant l'une quelconque des revendications 1 à 10, **caractérisé en ce que** l'on introduit une ou plusieurs matières premières pulvérulentes dans le dispositif tournant et on fabrique un -produit apte à l'écoulement sous la forme de noyaux de base en particulier en ajoutant un liant.

12. Procédé pour l'utilisation d'un dispositif suivant l'une quelconque des revendications 1 à 10, **caractérisé en ce que** l'on introduit des noyaux dans le dispositif tournant et on introduit ensuite ou parallèlement d'autres matières premières pulvérulentes et/ou liquides et/ou sous forme de suspension pour former une couche d'enrobage sur les noyaux.

13. Procédé pour l'utilisation d'un dispositif suivant l'une quelconque des revendications 11 ou 12, **caractérisé en ce que** l'on introduit un gaz de séchage à travers les perforations ou les tamis dans l'enveloppe conique (22) du rotor (4) pendant ou après la fabrication d'un produit apte à l'écoulement.

14. Procédé pour l'utilisation d'un dispositif suivant l'une quelconque des revendications 11 ou 12, **caractérisé en ce que** l'on règle la force centrifuge des matières premières, respectivement du produit apte à l'écoulement, au moyen d'une limitation centrale de l'espace de circulation dans le rotor (4), à une valeur toujours supérieure à la force d'adhérence des matières premières, respectivement des particules de produit entre elles et avec le rotor (4).

15. Procédé pour l'utilisation d'un dispositif suivant la revendication 12, **caractérisé en ce que** l'on introduit les matières premières pulvérulentes et/ou liquides en quantité et en unité de temps correspondant aux exigences technologiques, de telle manière que l'enrobage se forme en une couche pâteuse et que la vitesse de rotation du rotor (4) soit réglée de telle manière que les forces motrices permettent un roulement très libre des noyaux, respectivement des produits aptes à l'écoulement sur les pièces du dispositif et entre eux et qu'il ne se produise aucune déformation de la couche d'enrobage.

16. Procédé suivant l'une quelconque des revendications 12 à 15, **caractérisé en ce que** l'on forme l'une après l'autre plusieurs couches différentes avec des matières premières différentes et/ou des liants différents.
